# EUROPÄISCHE PATENTSCHRIFT

(11) **EP 2 592 554 B1**
(45) Veröffentlichungstag und Bekanntmachung des Hinweises auf die Patenterteilung: **14.10.2015**
(21) Anmeldenummer: 12191919.5
(22) Anmeldetag: 09.11.2012
(51) Int. Cl.: G06F 11/16, G06F 11/18

(54) **Verfahren zur Optimierung der Wartezeit in replika-deterministischen Systemen**
Method for optimizing the waiting time in replica-deterministic systems
Procédé destiné à optimiser le temps d'attente de systèmes déterministes avec répliques

(30) Priorität: 09.11.2011 AT 16562011
(43) Veröffentlichungstag der Anmeldung: 15.05.2013
(73) Patentinhaber: Fts Computertechnik Gmbh, 1040 Wien (AT)
(72) Erfinder: Kopetz, Hermann, 2500 Baden (AT)
(74) Vertreter: Patentanwaltskanzlei Matschnig & Forsthuber OG

(56) Entgegenhaltungen:
- US-A- 5 317 726
- KLAUS ECHTLE ET AL: "Clock Synchronization Issues in Multi-Cluster Time-Triggered Networks", 15. März 2010 (2010-03-15), MEASUREMENT, MODELLING, AND EVALUATION OF COMPUTING SYSTEMS AND DEPENDABILITY AND FAULT TOLERANCE, SPRINGER BERLIN HEIDELBERG, BERLIN, HEIDELBERG, PAGE(S) 39 - 61, XP019141061, ISBN: 978-3-642-12103-6 * das ganze Dokument *

## Beschreibung

Die vorliegende Erfindung betrifft ein Verfahren nach dem Oberbegriff des Anspruchs 1.

Die vorliegende Erfindung beschreibt ein zeitlich optimales Verfahren, um *Replika Determinismus* innerhalb eines verteilten Echtzeitcomputersystems zu realisieren, indem identische Knotenrechner (Replikas) die gleichen Programme abarbeiten.

Garantiert eine verteilte Systemarchitektur automatisch das replika-deterministische Verhalten der korrekten Knotenrechner zu ausgewählten Echtzeitpunkten, so kann durch den Vergleich von zwei unabhängig errechneten Resultaten zu diesen Echtzeitpunkten ein Fehler in einem Knotenrechner erkannt und bei Vergleich von drei Resultaten ein Fehler maskiert werden. Entsprechend dem Lehrbuch [6], S. 125, wird Determinismus wie folgt definiert: *"Determinism is a property of a computation that makes it possible to predict the future result of a computation, given that the initial state and all timed inputs are known."* Replika Determinismus liegt demnach vor, wenn alle korrekten Replikas zu ausgewählten Echtzeitpunkten die gleichen Ergebnisse erreichen [7].

Während das Fortschreiten der Echtzeit TAI durch aufwendige internationale physikalische Verfahren gemessen wird [8], bestimmt der innere Taktgeber eines Computers die Rechenzeit und damit das Resultat einer Berechnung zu einem gegebenen Echtzeitpunkt. Da in verschiedenen Knotenrechnern, die über autonome Taktgeber verfügen, das Verhältnis von Echtzeit zu Rechenzeit unterschiedlich ist, sind normalerweise zu einem gegebenen zukünftigen Echtzeitpunkt die Resultate in identischen Knotenrechner eines verteilten Computersystems unterschiedlich, selbst wenn die Berechnungen zum gleichen Echtzeitpunkt mit den gleichen Daten begonnen haben und von der exakt gleichen Software generiert werden.

Die vorliegende Erfindung legt ein optimales Verfahren offen, um in einer Systemarchitektur zu vordefinierten Echtzeitpunkten automatisch einen identischen inneren Zustand in allen korrekten Knotenrechner eines verteilten zeitgesteuerten Computersystems zu realisieren. Durch den Automatismus der inneren Zustandssynchronisation entfällt die Notwendigkeit, die Zustandssynchronisation explizit in der Anwendungssoftware durchzuführen. Damit werden der Entwicklungsaufwand und damit die Kosten, die anfallen, um ein fehlertolerantes Computersystem zu bauen, wesentlich gesenkt.

Der innere Zustand eines Knotenrechners zu einem gegebenen Echtzeitpunkt ist dabei definiert durch die Werte der Variablen des Knotenrechners zu diesem Echtzeitpunkt (siehe [6], Seite 84-88).

Aufgrund von physikalisch nicht kontrollierbaren Effekten bewegt sich die Anzahl der Schwingungen (und damit der Verarbeitungstakte) eines autonomen Taktgebers mit der nominalen Frequenz f in dem (im Datenblatt des Taktgebers spezifizierten) Intervall (f ± Δdf). Die Grundidee der Erfindung besteht nun darin, dass in einem verteilten Computersystem die physikalische Zeit durch periodische signifikante Echtzeitereignissen (SE) in eine Folge von nominal gleich langen Intervallen mit der Länge *dₙₒₘ* unterteilt wird und der langsamste Taktgeber des Ensembles von Knotenrechnern die Anzahl der Verarbeitungstakte AVT innerhalb eines solchen Echtzeitintervalls bestimmt. Da *a priori* nicht entschieden werden kann, welcher Knotenrechner der langsamste ist, wird angenommen, dass sich die Taktgeber aller korrekten Knotenrechner innerhalb des Intervalls (f ± Δdf) bewegen und der langsamste korrekte Taktgeber mindestens so schnell läuft wie (f - Δdf). Da aufgrund der Synchronisation und Digitalisierung der *lokale Wert* der Länge eines Echtzeitintervalls mit der nominalen Länge dₙₒₘ schwanken kann [6], S. 62, muss zur Berechnung der Verarbeitungstakte AVT die minimale Intervalllänge wie folgt herangezogen werden AVT= dₘᵢₙ (f - Δd), wobei *dₘᵢₙ = (dₙₒₘ - 2g),* wobei g die Granularität der globalen physikalischen Zeit auf der relevanten Abstraktionsebene angibt. Die Granularität der globalen Zeit hängt über die *reasonableness condition* g > P von der Präzision P der Uhrensynchronisation auf der relevanten Abstraktionsebene ab [6], S. 58. Jeder Knotenrechner zählt die Verarbeitungstakte nach dem Auftreten eines signifikanten Ereignisses SE, bis der Wert AVT erreicht wird und füllt das Intervall bis zum nächsten signifikanten Ereignis mit *wait-states (Warteintervallen)*.

Es entspricht dem Stand der Technik, dass durch die Verlängerung des Echtzeitintervalls, bis zu dem ein Resultat vorhanden sein muss, der Determinismus in einem System, das den Wert-Determinismus unterstützt, dessen Verhalten aber zeitlich nicht exakt vorhersehbar ist, auf einer höheren Abstraktionsebene mit einer gewissen Wahrscheinlichkeit wieder hergestellt werden kann ([6], S. 130). Der wesentliche Aspekt der vorliegenden Erfindung ist die Festlegung eines minimal notwendigen und damit optimalen Warteintervalls eines korrekten Knotenrechners. Dieses Warteintervall wird bestimmt von dem Verhältnis der tatsächlichen Frequenzen der Taktgeber des Ensembles zur Echtzeit. Da jede zentrale Echtzeituhr ausfallen kann, muss die Echtzeit über ein verteiltes fehlertolerantes Synchronisationsverfahren, das den Ausfall einer beliebigen Uhr toleriert, aufgebaut werden, so dass es im fehlertoleranten System keinen zentralen Ausfallpunkt gibt ([6], S. 69).

Wenn ein großes verteiltes Echtzeitcomputer System hierarchisch aufgebaut ist, so wird die Granularität der globalen Zeit auf den unterschiedlichen Abstraktionsebenen unterschiedlich groß sein. Wenn z.B. in einem *System-on-Chip (SoC)* die IP-cores über ein zeitgesteuertes *Network*-*on*-*Chip (NoC)* kommunizieren, so kann die Granularität der globalen Zeit im NoC zehn Nanosekunden betragen, wogegen in Knotenrechnern, die über ein lokales Echtzeitkommunikationssystem kommunizieren, die Granularität der globalen Zeit eine Mikrosekunde betragen kann.

Das vorliegende Verfahren zur Realisierung von Determinismus in einem verteilten Echtzeitcomputersystem unterscheidet sich von anderen bekannten Verfahren zur Erreichen von Determinismus und Fehlertoleranz durch die Bezugnahme auf die physikalischen Zeit, der Echtzeit, die entweder über einen fehlertoleranten Synchronisationsalgorithmus oder über externe redundante self-checking Synchronisationsnachrichten aufgebaut wird. Wie aus der Literatur bekannt ist, sind zum Aufbau einer fehlertoleranten physikalischen Zeit mindestens vier unabhängige Uhren erforderlich, wenn ein beliebiger Fehler in einer Uhr toleriert werden soll ([6], S. 72). Wenn eine nicht fehlertolerante externe Zeitreferenz angenommen wird, so kann das Auftreten von Fehlern in der physikalischen Referenzzeit nicht ausgeschlossen werden. Ein solcher Zeitfehler ist in [1] kein Problem, da die Zielsetzung von [1] der Aufbau einer Testumgebung und nicht der Aufbau eines fehlertoleranten Systems ist. Das Problem von solchen Zeitfehlern wird in den Architekturen zur Erreichung von Fehlertoleranz [2] und [3] nicht angesprochen. In [4] wird das Problem umgangen, indem *self-checking pairs* eingeführt werden. In [5] wird das Problem umgangen, indem unabhängige *Monitor Komponenten* die Verarbeitungskomponenten überwachen.

In KLAUS ECHTLE ET AL: "Clock Synchronization Issues in Multi-Cluster Time-Triggered Networks", 15. März 2010 (2010-03-15), MEASUREMENT, MODELLING, AND EVALUATION OF COMPUTING SYSTEMS AND DEPENDABILITY AND FAULT TOLERANCE, SPRINGER BERLIN HEIDELBERG, BERLIN, HEIDELBERG, PAGE(S) 39 - 61, XP019141061, wird ein Uhrensynchronisationsverfahren für verteilte zeitgesteuerte Echtzeitsysteme offenbart.

Das vorliegende Verfahren gemäß Anspruch 1 legt ein optimales Verfahren offen, um in einer Systemarchitektur zu vordefinierten Echtzeitpunkten automatisch einen identischen inneren Zustand in allen korrekten Knotenrechner eines verteilten zeitgesteuerten Computersystems zu realisieren. Durch den Automatismus der inneren Zustandssynchronisation entfällt die Notwendigkeit, die Zustandssynchronisation explizit in der Anwendungssoftware durchzuführen. Damit werden der Entwicklungsaufwand und damit die Kosten, die anfallen, um ein fehlertolerantes Computersystem zu bauen, wesentlich gesenkt.

Weitere vorteilhafte Ausführungsformen der Erfindung sind in den Unteransprüchen beschrieben.

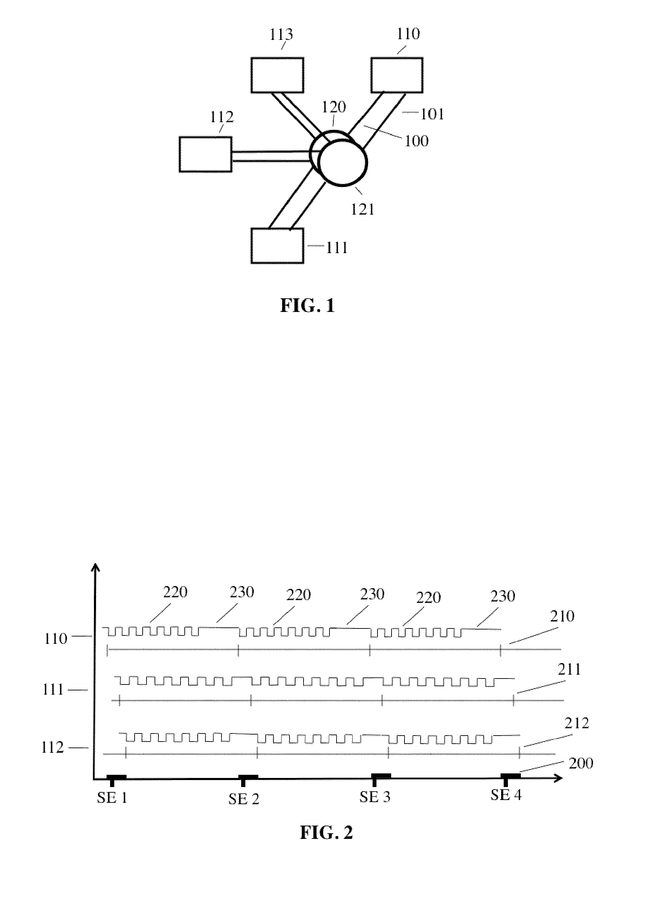

Die vorliegende Erfindung wird an Hand der Zeichnung erklärt. Es zeigt Fig. 1 den Aufbau eines verteilten fehlertoleranten Echtzeitcomputersystems, und Fig. 2 den zeitlichen Ablauf der Rechenzeit (Takte) bezogen auf das Fortschreiten der Echtzeit auf den unterschiedlichen Knotenrechnern.

Das folgende Beispiel zeigt den konkreten Aufbau eines beispielhaften verteilten Echtzeitsystems mit vier Knotenrechnern und den Ablauf der signifikanten Ereignisse auf drei der vier Knotenrechner an Hand der beigefügten Abbildungen.

Figur 1 zeigt ein Strukturdiagramm des verteilten Echtzeitsystems. Die vier Knotenrechner 110, 111, 112, 113 sind über jeweils einen Kommunikationskanals mit den beiden Sternkopplern 120, 121 verbunden. In Figur 1 verbindet der Kommunikationskanal 100 den Knotenrechner 110 mit dem Sternkoppler 120 und der Kommunikationskanal 101 den Knotenrechner 110 mit dem Sternkoppler 121 (analog bei den anderen Knotenrechnern). Zwei Kommunikationskanäle pro Knotenrechner und zwei unabhängige Sternkoppler sind in einem fehlertoleranten System erforderlich, um den Ausfall eines Kommunikationskanals oder eines Sternkopplers tolerieren zu können. In einem minimalen System müssen mindestens vier Knotenrechner vorhanden sein, um eine fehlertolerante globale Zeit aufbauen zu können.

Figur 2 zeigt den zeitlichen Ablauf der signifikanten Ereignisse auf den Knotenrechnern **110**, **111**, **112**, die eine Triade eines fehlertoleranten TMR (Triple Modular Redundant) Systems bilden ([6], S. 155-157). Auf der Abszisse von Figur 2 sind die globalen Echtzeitticks der signifikanten Synchronisationsereignisse SE1, SE2, SE3 und SE4 durch dicke senkrechte Striche dargestellt. In den Knotenrechnern finden die entsprechenden lokalen Synchronisationsereignisse SE **210**, **211**, **212** innerhalb der Präzision **200** der globalen Uhrensynchronisation statt. In jedem Knotenrechnern befindet sich ein autonomer Taktgeber, der sich im Intervall (f ± Δdf) bewegt, wobei f die nominale Frequenz eines Taktgebers ist und Δdf die maximale Abweichung eines noch korrekten Taktgebers von dieser nominalen Frequenz angibt. Die Anzahl der Verarbeitungstakte AVT zwischen zwei aufeinanderfolgenden SEs mit dem nominalen Abstand dₙₒₘ bestimmt sich durch AVT= dₘᵢₙ(f - Δdf), wo dₘᵢₙ = (dₙₒₘ - 2g) die minimale Dauer zwischen zwei aufeinanderfolgenden SEs angibt. Der nominale Abstandswert dₙₒₘ ist um 2g, der Granularität der globalen physikalischen Zeit, zu reduzieren, um den Synchronisationsfehler und den Digitalisierungsfehler zu kompensieren. Im konkreten Beispiel der Fig. 2 wird angenommen, dass innerhalb des Abstands dₙₒₘ auf allen korrekten Rechnern sieben Takte **220** ablaufen können. Nach Abarbeitung dieser sieben Takte gehen die Rechner erfindungsgemäß in den Wartezustand bis das nächste lokale signifikante Synchronisationsereignis auftritt. Beim Knotenrechner mit dem schnellsten Taktgeber, d.i. in Fig. 2 der Knotenrechner **110** ist dieses Warteintervall **230** am längsten, wogegen im Knotenrechner **111,** dem Knotenrechner mit dem langsamsten Taktgeber, dieses Warteintervall am kürzesten ist.

Die lokalen Synchronisationsereignisse SE **210, 211, 212** können entweder durch eine fehlertolerante interne Uhrensynchronisation oder durch eine fehlertolerante externe Uhrensynchronisation hergestellt werden. In beiden Fällen werden diese Ereignisse in korrekten Knotenrechner innerhalb der Präzision der globalen Zeit auftreten.

Wenn nun die Knotenrechnern **110, 111, 112**, als *IP-Cores* in einem *System-on-Chip (SoC)* realisiert werden und diese Knotenrechner über ein zeitgesteuertes *Network-on-Chip (NoC)* kommunizieren, so ist zu berücksichtigen, dass das NoC von einem einzigen Taktgeber getrieben wird, wobei sich die Sendezeitpunkte des NoC vom Makrotick innerhalb des SoC ableiten. Um den zeitlichen Gleichlauf mit anderen SoCs eines Ensembles zu erreichen, sind diese SoC internen Makroticks mit den externen Synchronisationssignalen zu synchronisieren. Dies geschieht indem die Anzahl Z_{macro} der SoC internen Makroticks zwischen den äquidistanten externen Synchronisationssignalen statisch festgelegt wird und der Abstand dₑₓₜ zwischen zwei externen Synchronisationssignalen durch Z_{macro} geteilt wird, um das Intervall dᵢₙₜ zwischen zwei internen Macroticks zu bestimmen. Diese internen Macroticks müssen dann durch eine entsprechende Logik innerhalb des SoCs von einem Taktgeber des SoCs abgeleitet werden. Wenn nicht alle lokalen IP Cores vom gleichen Taktgeber getrieben werden, so ist innerhalb eines SoCs zwischen einem IP Core und dem NoC die gleiche beschriebene Vorgangsweise wie zwischen Knotenrechnern einzuhalten.

Das beschriebene innovative Verfahren zur Realisierung von Determinismus lässt sich auf der Ebene der Hardware oder des Betriebssystems eines Knotenrechners autonom implementieren. Dadurch wird die Entwicklung und Validierung der Anwendungssoftware wesentlich vereinfacht, was den wirtschaftlichen Wert dieser Erfindung unterstreicht.

### Zitierte Literatur

[1] US 7,804,890 Navada, et. al. *Method and System for Response Determinism by Synchronization.* (granted Sept. 28, 2010).
[2] US 7,937,618. Dorai et al. *Distributed, Fault-tolerant and highly available computersystem.* (granted May 3, 2011).
[3] US5,317,726 Horst. *Multiple-processor computer system with asynchronous execution of identical code streams.* (granted May 31, 1994).
[4] US6,233,702 Horst et al. *Self-checked, lock step processor pairs.* (granted May 15,2001).
[5] US 7,908,520 Avizienis, A*. Self-testing and -repairing fault-tolerance infrastructure for computer systems.* (granted March 15, 2011)
[6] Kopetz, H. (2011). Real-Time Systems, Design Principles for Distributed Embedded Applications. Springer Verlag.
[7] Poledna, S. (1995). Fault-Tolerant Real-Time Systems, The Problem of Replika Determinism. Springer Verlag.
[8] TAI-Temps Atomique International, Wikipedia. 2011.

## Patentansprüche

1. Verfahren zur Realisierung von replika-deterministischem Verhalten in einem verteilten zeitgesteuerten Computersystem, welches Computersystem eine Anzahl von Knotenrechnern, vorzugsweise autonomen Knotenrechnern umfasst, die über eine gemeinsame fehlertolerante Echtzeitbasis mit einer Präzision P verfügen und die über ein zeitgesteuertes Echtzeitkommunikationssystem verbunden sind, wobei jeder Knotenrechner mit einem eigenen Taktgeber einer nominalen Frequenz f ausgestattet ist, und wobei sich die tatsächlichen Frequenzen der Taktgeber der Knotenrechner in einem Intervall (f ± Δdf) um die nominale Frequenz f bewegen, wobei ein definierter innerer Zustand eines Knotenrechners zum Zeitpunkt des Auftretens von periodischen signifikanten Ereignissen SE mit dem nominalen Echtzeitabstand *dₙₒₘ* dadurch gewährleistet wird, dass die Anzahl der Verarbeitungstakte AVT zwischen zwei aufeinanderfolgenden signifikanten Ereignissen SEs bestimmt ist durch *AVT*= *dₘᵢ(f - Δdf*)*,* wo *dₘᵢₙ* = *(dₙₒₘ -2g),* wobei g die Granularität einer globalen physikalischen Zeit angibt, und wo jeder Knotenrechner nach dem Auftreten eines signifikanten Ereignisses SE einen Zähler initialisiert und die Verarbeitungstakte in diesem Zähler zählt und, wenn dieser Zähler den Wert AVT erreicht, eine Folge von *Warteintervallen* bis zum Auftreten des nächsten signifikanten Ereignisses SE einfügt.

2. Verfahren nach Anspruch 1, **dadurch gekennzeichnet, dass** periodisch eintreffende Nachrichten zur externen Uhrensynchronisation signifikante Ereignisse darstellen.

3. Verfahren nach Anspruch 1, **dadurch gekennzeichnet, dass** die signifikanten Ereignisse durch eine fehlertolerante interne Uhrensynchronisation gebildet werden.

4. Verfahren nach einem der Ansprüche 1 bis 3, **dadurch gekennzeichnet, dass** jeder interne Makrotick der globalen Zeit innerhalb eines Knotenrechners ein signifikantes Ereignis SE darstellt.

5. Verfahren nach einem oder mehreren der Ansprüche 1 bis 3, **dadurch gekennzeichnet, dass** ein Knotenrechner als ein IP-Core in einem System-on-Chip SoC realisiert ist.

6. Verfahren nach Anspruch 4 und 5, **dadurch gekennzeichnet dass** das innerhalb eines System-on-Chip SoC ein zeitgesteuertes Network on Chip realisiert ist, welches das Signal zum Senden einer Nachricht vom Auftreten eines spezifizierten internen Macroticks ableitet.

7. Apparat, insbesondere Knotenrechner zum Durchführen eines Verfahrens nach einem der Ansprüche 1 bis 6.

## Claims

1. A method for realising replica-deterministic behaviour in a distributed time-controlled computer system, which computer system comprises a number of node computers, preferably autonomous node computers, which have a common fault-tolerant real-time base with a precision P and which are connected via a time-controlled real-time communication system, wherein each node computer is equipped with its own clock generator of a nominal frequency f, and wherein the actual frequencies of the clock generators of the node computers move in an interval (f ± Δdf) by the nominal frequency f, wherein a defined internal state of a node computer is ensured at the moment of the occurrence of periodic significant events SE with the nominal real-time interval *dnom* in that the number of processing cycles AVT between two successive significant events SEs is determined by *AVT = dₘᵢₙ (f-Δdf)*, where *d*ₘᵢₙ = *(dₙₒₘ-2g)*, wherein g specifies the granularity of a global physical time, and where each node computer after the occurrence of a significant event SE initialises a counter and counts the processing cycles in this counter and, when this counter reaches the value AVT, inserts a sequence of *waiting intervals* until the occurrence of the next significant event SE.

2. The method according to Claim 1, **characterised in that** periodically arriving messages for external clock synchronisation constitute significant events.

3. The method according to Claim 1, **characterised in that** the significant events are formed by a fault-tolerant internal clock synchronisation.

4. The method according to one of Claims 1 to 3, **characterised in that** each internal macro tick of the global time within a node computer represents a significant event SE.

5. The method according to one or more of claims 1 to 3, **characterised in that** a node computer is realised as an IP core in a system-on-chip SoC.

6. The method according to Claim 4 and 5, **characterised in that** a time-controlled network on chip is realised within a system-on-chip SoC, which network on chip derives the signal for sending a message from the occurrence of a specified internal macro tick.

7. An apparatus, in particular a node computer for carrying out a method according to one of Claims 1 to 6.

## Revendications

1. Procédé de réalisation de comportements déterministes avec répliques dans un système informatique réparti cadencé, ledit système informatique comprenant un certain nombre de contrôleurs de noeud, préférentiellement des contrôleurs de noeud autonomes disposant d'une base temps réel commune tolérante aux erreurs avec une précision P et reliés par un système de communication en temps réel cadencé, chaque contrôleur de noeud étant pourvu d'une horloge propre de fréquence nominale f, et les fréquences effectives des horloges des contrôleurs de noeud se déplaçant dans un intervalle (f ± Δdf) autour de la nominale f, un état interne défini d'un contrôleur de noeud au moment de l'apparition d'événements périodiques signifiants SE avec l'intervalle temporel nominal *dₙₒₘ* étant assuré en ce que le nombre des cycles de traitement AVT entre deux événements signifiants SE successifs est déterminé par *AVT* = *dₘᵢₙ (f-Δdf)*, où *dₘᵢₙ* = *(dₙₒₘ*-*2g), g* indiquant la granularité d'un temps physique global, et où chaque contrôleur de noeud initialise un compteur après l'apparition d'un événement signifiant SE et compte les cycles de traitement dans ledit compteur et, quand ledit compteur atteint la valeur AVT, insère une série *d'intervalles d'attente* jusqu'à l'apparition du prochain événement signifiant SE.

2. Procédé selon la revendication 1, **caractérisé en ce que** des messages périodiquement entrants pour la synchronisation d'horloge externe constituent des événements signifiants.

3. Procédé selon la revendication 1, **caractérisé en ce que** les événements signifiants sont formés par une synchronisation d'horloge interne tolérante aux erreurs.

4. Procédé selon l'une des revendications 1 à 3, **caractérisé en ce que** chaque macro-tic interne du temps global à l'intérieur d'un contrôleur de noeud constitue un événement signifiant SE.

5. Procédé selon une ou plusieurs des revendications 1 à 3, **caractérisé en ce qu'**un contrôleur de noeud est réalisé comme noyau IP dans un système sur une puce SoC.

6. Procédé selon les revendications 4 et 5, **caractérisé en ce qu'**un réseau sur une puce cadencé est réalisé à l'intérieur d'un système sur une puce SoC, lequel déduit le signal pour l'émission d'un message de l'apparition d'un macro-tic interne spécifié.

7. Appareil, en particulier contrôleur de noeud pour l'exécution d'un procédé selon l'une des revendications 1 à 6.
